# EUROPEAN PATENT APPLICATION

(11) **EP 2 453 662 A2**
(43) Date of publication of application: **16.05.2012**
(21) Application number: 11175162.4
(22) Date of filing: 25.07.2011
(51) Int. Cl.: H04N 13/04

(54) **Computer, monitor, recording medium, and method for providing 3D image thereof**

(30) Priority: 15.11.2010 KR 20100113551
(71) Applicant: Samsung Electronics Co., Ltd., Suwon-si, Gyeonggi-do (KR)
(72) Inventor: Kim, Su-hyun, Daegu (KR); Kim, Hak-jae, Gyeonggi-do (KR)
(74) Representative: Bruce, Alexander Richard Henry

(57) **Abstract**

A computer, a monitor, a recording medium, and a method for providing a three-dimensional (3D) image thereof are provided. The method of providing the 3D includes: generating a left eye image frame and a right eye image frame corresponding to a frame of an input 3D image; inserting an indicator indicating whether a current frame, among the left eye image frame and the right eye image frame, is a left eye image or a right eye image to a specific pixel of the current frame; and outputting, to a monitor, an image signal comprising the left eye image frame and the right eye image frame, to at least one of which the indicator is inserted.

## Description

The present invention relates to a computer, a monitor, a recording medium and a method of providing a three-dimensional (3D) image thereof, and more particularly, to a computer, a monitor, and a recording medium for providing a 3D image and a method of providing a 3D image thereof.

A 3D stereoscopic image technology is applicable to various fields such as information communication, broadcasting, medicine, education and training, military, gaming, animation, virtual reality, computer aided drafting (CAD), and industrial technology, and is regarded as a core base technology for the next generation 3D stereoscopic multimedia information communication, which is implemented in all the aforementioned fields.

Generally, a stereoscopic sense that a person perceives occurs from a complex effect of the degree of change of thickness of the person's eye lens according to the location of an object to be observed, the angle difference of the object observed from both eyes, the differences of location and shape of the object observed from both eyes, the time difference due to movement of the object, and other various psychological and memory effects.

In particular, binocular disparity, caused by about a 6 to 7 cm lateral distance between the person's left eye and right eye, can be regarded as a main cause of the stereoscopic sense. Due to binocular disparity, the person perceives the object with an angle difference, which makes the left eye and the right eye receive different images. When these two images are transmitted to the person's brain through retinas, the brain can perceive the original 3D stereoscopic image by combining the two pieces of information exactly.

There are two types of stereoscopic image display apparatuses: glasses-type apparatuses which use special glasses, and non glasses-type apparatuses which do not use such special glasses. A glasses-type apparatus may adopt a color filtering method which separately selects images by filtering colors which are in mutually complementary relationships, a polarized filtering method which separates the images received by a left eye from those received by a right eye using a light-shading effect caused by a combination of polarized light elements meeting at right angles, or a shutter glasses method which enables a person to perceive a stereoscopic sense by blocking a left eye and a right eye alternately in response to a sync (synchronisation) signal that is synchronized with a projection of a left eye image signal and a right eye image signal on a screen.

A 3D image includes a left eye image perceived by a left eye and a right eye image perceived by a right eye. A 3D image display apparatus displays the stereoscopic sense of a 3D image using a time difference between a left eye image and a right eye image.

According to the shutter glasses method, a user wears 3D glasses to watch a 3D image displayed on a 3D display apparatus. The 3D glasses receive a sync signal from the 3D display apparatus to synchronize with the 3D display apparatus. For example, the sync signal may be transmitted in an infrared signal.

In order to provide a 3D image in a personal computer (PC) environment, a graphics card used exclusively for 3D images is installed in a computer, and the computer synchronizes a monitor with 3D glasses. Accordingly, a user should purchase a set of the monitor, a graphics card and glasses which are used exclusively for a 3D image. Thus, a user wishing to enjoy a 3D image using his or her computer must spend a great amount of money.

Aspects of exemplary embodiments relate to a computer, a monitor, and a recording medium which insert an indicator indicating whether a current frame is a left eye image or a right eye image to a specific pixel of each of a left eye image frame and a right eye image frame and output the indicator, and a method of providing a three-dimensional (3D) image thereof.

According to an aspect of an exemplary embodiment, there is provided a method of providing a 3D image in a computer outputting a 3D image to a monitor, the method including: processing a left eye image frame and a right eye image frame corresponding to a frame of an input 3D image; inserting an indicator indicating whether a current frame, among the left eye image frame and the right eye image frame, is a left eye image or a right eye image to a specific pixel of the current frame; and outputting, to the monitor, an image signal including the left eye image frame and the right eye image frame, to at least one of which the indicator is inserted.

The generating and the inserting may be performed by a 3D image driver embodied as software.

The specific pixel may be a first pixel of the current frame.

The indicator may represent the specific pixel as a black pixel when the current frame is one of the left eye image and the right eye image, and may represent the specific pixel as a non-black pixel when the current frame is the other of the left eye image and the right eye image.

According to an aspect of another exemplary embodiment, there is provided a computer readable recording medium having recorded thereon a program executable by a computer for performing the above-mentioned 3D image providing method.

According to an aspect of another exemplary embodiment, there is provided a computer outputting a 3D image to a monitor, the computer including: a processing unit which executes a 3D image driver; and a graphics card which outputs, to the monitor, a 3D image generated by the 3D image driver, wherein the 3D image driver generates a left eye image frame and a right eye image frame corresponding to a frame of an input 3D image and inserts an indicator indicating whether a current frame, among the left eye image frame and the right eye image frame, is a left eye image or a right eye image to a specific pixel of the current frame.

The specific pixel may be a first pixel of the current frame.

The indicator may represent the specific pixel as a black pixel when the current frame is one of the left eye image and the right eye image, and may represent the specific pixel as a non-black pixel when the current frame is the other of the left eye image and the right eye image.

According to an aspect of another exemplary embodiment, there is provided a method of providing a 3D image in a monitor which displays a 3D image received from a computer, the method including: recognizing whether a current frame of the 3D image is a left eye image frame or a right eye image frame using an indicator included in a specific pixel of the current frame; generating a sync signal for 3D glasses using the indicator; transmitting the sync signal to the 3D glasses; and alternately displaying the left eye image frame and the right eye image frame.

The specific pixel may be a first pixel of the current frame.

The recognizing may include, if the specific pixel is a black pixel, recognizing the current frame as one of the left eye image frame and the right eye image frame, and if the specific pixel is a non-black pixel, recognizing the current frame as the other of the left eye image frame and the right eye image frame.

According to an aspect of another exemplary embodiment, there is provided a monitor displaying a 3D image received from a computer, the monitor including: an image input unit which receives the 3D image; a control unit which recognizes whether a current frame of the 3D image is a left eye image frame or a right eye image frame using an indicator included in a specific pixel of the current frame, and generates a sync signal for 3D glasses using the indicator; a glasses signal transmitting unit which transmits the sync signal to the 3D glasses; and a display unit which alternately displays the left eye image frame and the right eye image frame.

The specific pixel may be a first pixel of the current frame.

If the specific pixel is a black signal, the control unit may recognize the current frame as one of the left eye image frame and the right eye image frame, and if the specific pixel is a non-black pixel, the control unit may recognize the current frame as the other of the left eye image frame and the right eye image frame.

According to an aspect of another exemplary embodiment, there is provided a system for viewing a 3D image, the system including: a monitor displaying the 3D image, the monitor including: an image input unit which receive the 3D image, a control unit which recognizes whether a current frame of the 3D image is a left eye image frame or a right eye image frame using an indicator included in a specific pixel of the current frame, and generates a sync signal, a glasses signal transmitting unit which transmits the sync signal, and a display unit which alternately displays the left eye image frame and the right eye image frame; and 3D glasses which receives the sync signal transmitted from the glasses signal transmitting unit, and which alternately opens and closes a left eye glass and a right eye glass according to the received sync signal.

According to an aspect of another exemplary embodiment, there is provided a method of providing a 3D image, the method including: recognizing whether a current frame of the 3D image is a left eye image frame or a right eye image frame using an indicator included in a specific pixel of a frame of the 3D image; generating a sync signal for 3D glasses using the indicator; and transmitting the sync signal to the 3D glasses.

As described above, according to various exemplary embodiments, a computer, a monitor, and a recording medium which inserts an indicator indicating whether a current frame is a left eye image or a right eye image is inserted to a specific pixel of the current frame and outputs a 3D image, and a method of providing a 3D image thereof, are provided. Accordingly, a computer may output a 3D image without a graphics card used exclusively for a 3D image. In particular, as a 3D image driver may be executed in the form of software, a computer may output a 3D image using an existing graphics card.

The above and/or other aspects will be more apparent by describing exemplary embodiments with reference to the accompanying drawings, in which:
FIG. 1 is a view illustrating configuration of a three-dimensional (3D) image providing system according to an exemplary embodiment;
FIG. 2 is a block diagram illustrating a structure of a computer which provides a 3D image according to an exemplary embodiment;
FIG. 3 is a block diagram illustrating a structure of a monitor which displays a 3D image according to an exemplary embodiment;
FIG. 4 is a block diagram illustrating a structure of 3D glasses according to an exemplary embodiment;
FIG. 5 is a flowchart to explain a method of providing a 3D image according to an exemplary embodiment;
FIG. 6 is a view illustrating a signal form of a 3D image and 3D glasses according to an exemplary embodiment; and
FIG. 7 is a view illustrating a 3D image providing system according to a related art method.

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the description with unnecessary detail.

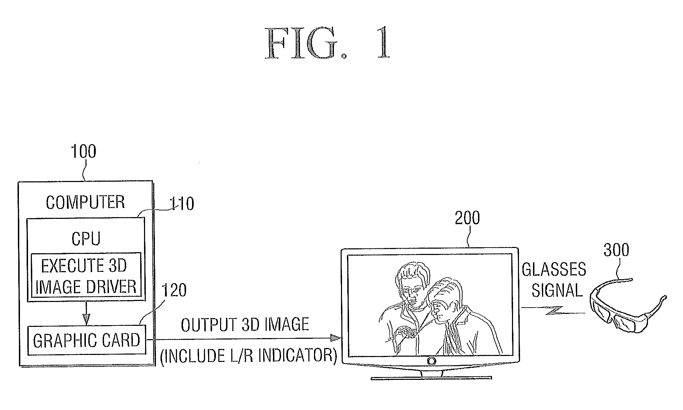

FIG. 1 is a view illustrating configuration of a three-dimensional (3D) image providing system according to an exemplary embodiment. As illustrated in FIG. 1, the 3D image providing system includes a computer 100, a monitor 200, and 3D glasses 300.

The computer 100 generates a 3D image and outputs the generated 3D image to the monitor 200. Specifically, the computer 100 generates a content of a 3D image or executes a 3D application (such as a game) and outputs the 3D image to the monitor 200.

In this case, the computer 100 generates a left eye image frame and a right eye image frame for a frame of the 3D image. In addition, the computer 100 inserts an indicator indicating whether a current frame is a left eye image frame or a right eye image frame to a specific pixel, or specific pixels, of the left eye image frame and the right eye image frame respectively. Accordingly, the computer 100 outputs an image signal regarding the left eye image frame and the right eye image frame to which a left eye indicator and a right eye indicator are respectively inserted, to the monitor.

Herein, the indicator indicates whether a current frame is a left eye image frame or a right eye image frame and is recorded in a specific pixel in image data corresponding to one frame. That is, the indicator is an image signal value of a specific pixel and indicates whether a current frame is a left eye image frame or a right eye image frame. For example, if a current frame is a left eye image frame, the computer 100 may record a black value as an image signal value of a specific pixel, and if a current frame is a right eye image frame, the computer 100 may record a different value (for example, a red value) as an image signal value of a specific pixel.

As such, the computer 100 inserts an indicator to a specific pixel value of a corresponding frame to indicate whether the frame is a left eye image frame or a right eye image frame. In this case, the specific pixel to which an indicator is inserted may be any pixel of the frame. For example, the specific pixel may be the first pixel in the frame.

Meanwhile, a processing unit, such as a central processing unit (CPU) 110, of the computer 100 executes a 3D image driver to generate a 3D image. A general graphics card 120 (that is, a graphics card which does not support a 3D image operation) cannot generate a left eye image and a right eye image by itself and thus, the CPU 110 executes a 3D image driver to generate a left eye image and a right eye image corresponding to a frame of a 3D image from a source of the 3D image. In addition, the 3D image driver executed by the CPU 110 inserts an indicator to the left eye image frame and the right eye image frame.

Accordingly, the graphics card 120 outputs a 3D image signal including the indicator to the monitor 200. It is understood that another exemplary embodiment is not limited to a general graphics card 120 which does not support a 3D image operation.

The monitor 200 displays a left eye image frame and a right eye image frame corresponding to a frame of the 3D image on the screen. In addition, the monitor 200 may recognize whether a currently input image frame is a left eye image frame or a right eye image frame using the indicator. Accordingly, the monitor 200 may generate a sync signal to operate the 3D glasses 300 using the indicator. In addition, the monitor 200 outputs the 3D glasses sync signal to the 3D glasses 300.

The 3D glasses 300 alternately opens and closes left eye glasses and right eye glasses using the 3D glasses sync signal received from the monitor 200.

Accordingly, a user may watch a 3D image displayed on the monitor 200 using the 3D glasses 300. As the monitor 200 recognizes whether an input image frame is a left eye image frame or a right eye image frame using the indicator, the monitor 200 may synchronize the 3D glasses 300 with the sync signal.

Through the above process, a user may watch a 3D image without a case where the monitor 200 is not synchronized with the 3D glasses 300. In addition, a user may enjoy a 3D image using the computer 100 even if a graphics card for a 3D image is not installed in the computer.

While exemplary embodiments described herein provide an indicator in each image frame to indicate whether the frame is a left eye image frame or a right eye image frame, it is understood that another exemplary embodiment is not limited thereto. For example, according to another exemplary embodiment, the indicator may be provided in only one or some image frames for every predetermined number of image frames (e.g., in only a first image frame from among a plurality of consecutive image frames). In this case, the monitor 200 may recognize whether a currently input image frame is a left eye image frame or a right eye image frame using an indicator included in another frame.

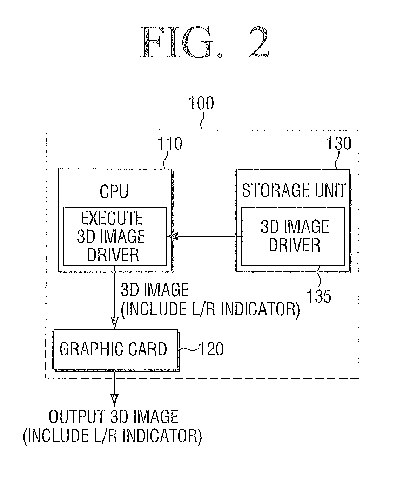

Hereinafter, structures of the computer 100, the monitor 200, and the 3D glasses 300 will be explained in detail with reference to FIGS. 2 to 4.

FIG. 2 is a block diagram illustrating a structure of a computer 100 which provides a 3D image according to an exemplary embodiment. As illustrated in FIG. 2, the computer 100 includes the CPU 110, the graphics card 120, and a storage unit 130.

The storage unit 130 stores various kinds of software and data. Specifically, the storage unit 130 stores a content file including a 3D image or an application file (e.g., a game file) represented in a 3D image. As such, the storage unit 130 may store data which becomes a source of a 3D image. The storage unit 130 may be external or internal, and may include at least one of a volatile memory (such as RAM) and a non-volatile memory (such as ROM, flash memory, and a hard disk drive).

In addition, the storage unit 130 stores a 3D image driver 135. Herein, the 3D image driver 135 generates a left eye image frame and a right eye image frame corresponding to a frame of a 3D image using a 3D image source. The 3D image driver 135 corresponds to a driver which may be realized as software. The 3D image driver 135 is executed by the CPU 110.

The CPU 110 controls overall operations of the computer 100. Specifically, the CPU 110 executes various programs stored in the storage unit 130 and reproduces contents. For example, the CPU 110 may reproduce contents including a 3D image and execute a game realized as a 3D image.

In this case, the CPU 110 generates a left eye image frame and a right eye image frame corresponding to a frame of a 3D image using a 3D image source by executing the 3D image driver 135. Herein, the 3D image source may be 3D image data including image data and depth values of each pixel of an image frame of the image data. Accordingly, the 3D image driver 135 generates a left eye image frame and a right eye image frame to represent a 3D image with depth using the image data and depth values of the 3D image source.

In addition, the 3D image driver 135 executed by the CPU 110 inserts an indicator when a left eye image frame and a right eye image frame are generated or processed. Herein, the indicator indicates whether a current frame is a left eye image frame or a right eye image frame. A detailed description regarding the indicator has been provided above.

As such, the CPU 110 transmits a left eye image frame and a right eye image frame of a 3D image including an indicator to the graphics card 120.

The graphics card 120 converts the left eye image frame and the right eye image frame input from the CPU 110 to a signal in a format compatible for the monitor 200 and outputs the converted signal. That is, the graphics card 120 converts input image data to a format compatible for interface with the graphics card 120 and the monitor 200.

The graphics card 120 is connected to the monitor 200 through a wired or wireless interface. In this case, the graphics card 120 may be connected to the monitor 200 through any of various interfaces. For example, the graphics card 120 may be connected to the monitor via Digital Visual Interface (DVI), HDMI 1.0 to HDMI 1.3, etc. Since DVI or HDMI 1.0 to HDMI 1. 3 do not include an indicator for distinguishing a left eye image from a right eye image, a timing of displaying a left eye image and a right eye image may not be synchronized with the 3D glasses 300 when the monitor 200 displays a 3D image. However, according to an exemplary embodiment, the 3D image driver 135 inserts an indicator to a specific pixel of a left eye image frame and an indicator to the specific pixel of a right eye image frame and thus, the monitor may recognize the left eye image frame and the right eye image frame using the indicator even if the graphics card 120 is connected to the monitor 200 via DVI or HDMI 1.0 to HDMI 1. 3.

Accordingly, the graphics card 120 outputs a 3D image signal including an indicator to the connected monitor 120. In some embodiments, the indicator is in a part of the image signal corresponding to the displayed image, i.e. corresponding to one or more pixels.

The computer 100 having the above configuration generates a left eye image frame and a right eye image frame of a 3D image by executing the 3D image driver 135 that may be software. The 3D image driver 130 inserts an indicator when generating the left eye image frame and the right eye image frame.

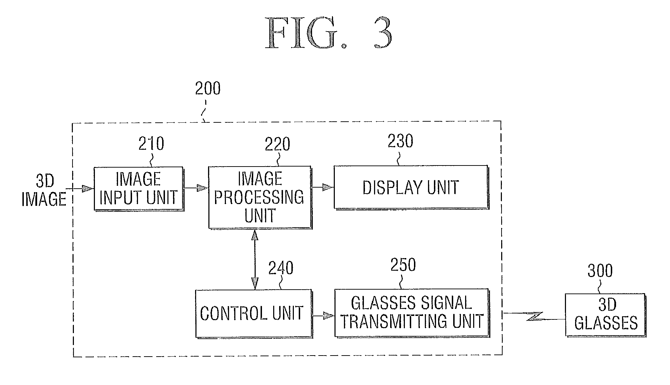

FIG. 3 is a block diagram illustrating a structure of a monitor 200 which displays a 3D image according to an exemplary embodiment. As illustrated in FIG. 3, the monitor 200 includes an image input unit 210, an image processing unit 220, a display unit 230, a control unit 240, and a glasses signal transmitting unit 250.

The image input unit 210 is connected to an external apparatus and receives an image. For example, the image input unit 210 may be connected to the computer 100 and receive a 3D image signal from the computer 100. The interface used in the image input unit 210 may be an interface using DVI, HDMI 1.0 to HDMI 1.3, etc.

The image processing unit 220 performs signal processing such as video decoding and video scaling on an image signal input from the image input unit 210. In addition, the image processing unit 220 transmits the processed image signal to the display unit 230.

The display unit 230 outputs the image transmitted from the image processing unit 220 on the screen. In particular, if the transmitted image is a 3D image, the display unit 230 alternately outputs a left eye image and a right eye image on the screen.

The control unit 240 controls overall operations of the monitor 200. Specifically, the control unit 240 recognizes whether a currently input image frame is a left eye image frame or a right eye image frame using an indicator included in a specific pixel of an input 3D image and generates a sync signal for 3D glasses 300 using the indicator.

Specifically, the control unit 240 reads a signal value of a specific pixel from data corresponding to a frame of an input 3D image. Herein, the specific pixel includes an indicator indicating whether the frame is a left eye image frame or a right eye image frame. The specific pixel may be the first pixel of a corresponding frame or another pixel. The control unit 240 recognizes whether a currently input frame is a left eye image frame or a right eye image frame according to a signal value of the specific pixel.

For example, if the signal value of the specific pixel corresponds to a black color value, the control unit 240 may recognize that an input image frame is a left eye image frame, and if the signal value does not correspond to the black color value, the control unit 240 may recognize that an input image frame is a right eye image frame.

However, it is understood that another exemplary embodiment is not limited thereto. For example, according to another exemplary embodiment, if the signal value corresponds to the black color value, the control unit 240 may recognize that an input image frame is a right eye image frame, and if the signal value does not correspond to the black color value, the control unit 240 may recognize that an input image frame is a left eye image frame.

In addition, the control unit 240 generates a sync signal of the 3D glasses 300 using the indicator. Specifically, if the control unit 240 recognizes that a currently input frame is a left eye image frame using the indicator, the control unit 240 generates a sync signal indicating that the current image is a left eye image. In addition, if the control unit 240 recognizes that a currently input frame is a right eye image frame using the indicator, the control unit 240 generates a sync signal indicating that the current image is a right eye image.

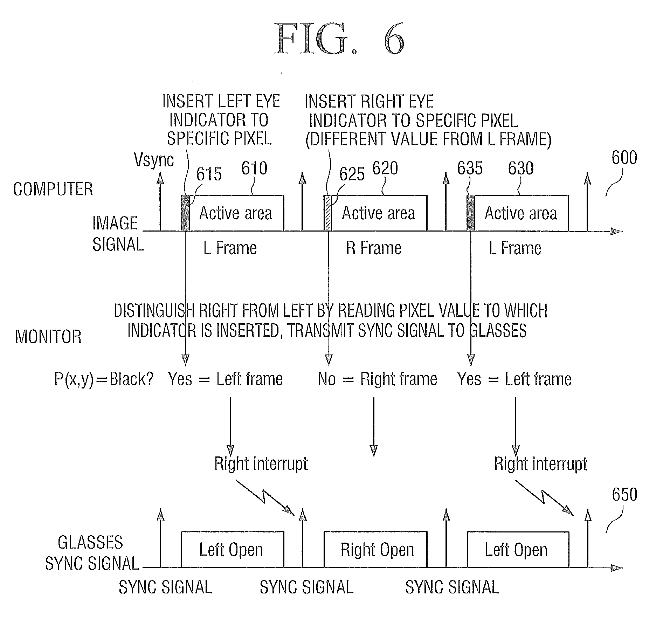

For example, if the control unit 240 recognizes that a currently input frame is a left eye image frame, the control unit 240 may generate an interrupt signal as a sync signal at a time when the left eye image frame ends, and if the control unit 240 recognizes that a currently input frame is a right eye image frame, the control unit 240 may generate a sync signal without generating an interrupt. This will be explained below with reference to FIG. 6.

The glasses signal transmitting unit 250 transmits, to the 3D glasses 300, a sync signal which is a clock signal for alternately opening left eye glasses and right eye glasses of the 3D glasses 300. The glasses signal transmitting unit 250 transmits the sync signal using, for example, an infrared signal or a Radio Frequency (RF) signal.

As such, the monitor 200 may recognize whether an input image frame is a left eye image frame or a right eye image frame using an indicator. Accordingly, the monitor may generate and transmit a sync signal of the 3D glasses 300 according to a time when the left eye image frame and the right eye image frame are displayed.

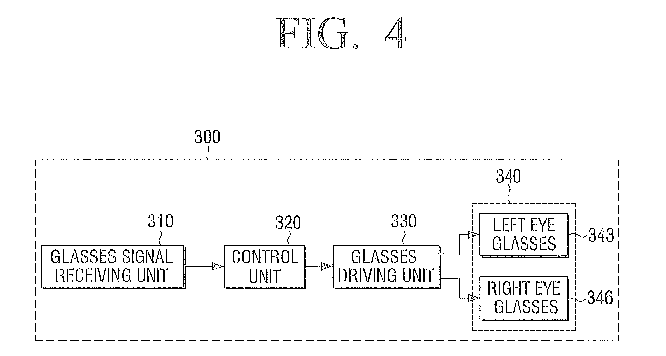

Hereinafter, a detailed structure of 3D glasses 300 will be explained with reference to FIG. 4. FIG. 4 is a block diagram illustrating the detailed structure of the 3D glasses 300 according to an exemplary embodiment.

As illustrated in FIG. 4, the 3D glasses 300 include a glasses signal receiving unit 310, a control unit 320, a glasses driving unit 330, and a glasses unit 340.

The glasses signal receiving unit 310 receives a sync signal of a 3D image from the monitor 200. For example, the glasses signal receiving unit 310 receives the sync signal through an infrared signal or an RF signal.

The control unit 320 controls overall operations of the 3D glasses 300. Specifically, the control unit 220 controls an operation of the glasses driving unit 330 based on the received sync signal. In particular, the control unit 320 controls the glasses driving unit 330 to generate a driving signal for driving the glasses unit 340 based on the received sync signal.

The glasses driving unit 330 generates a driving signal based on the received sync signal. Since the glasses unit 340, which will be explained below, includes left eye glasses 343 and right eye glasses 346, the glasses driving unit 330 generates a left eye driving signal for driving the left eye glasses 343 and a right eye driving signal for driving the right eye glasses 346 and transmits the generated left eye driving signal to the left eye glasses 343 and the generated right eye driving signal to the right eye glasses 346.

As described above, the glasses unit 340 includes the left eye glasses 343 and the right eye glasses 346 and alternately opens and closes each of the glasses 343 and 346 according to a driving signal received from the glasses driving unit 330.

The 3D glasses 300 having the above configuration alternately opens and closes left eye glasses 343 and right eye glasses 346 according to a sync signal transmitted from the monitor 200.

In the 3D image providing system having the above structure, the computer 100 transmits a 3D image to which an indicator is inserted to be displayed by the monitor 200 such that the monitor 200 may be synchronized with the 3D glasses 300. In particular, as the computer 100 generates a left eye image and a right eye image to which an indicator is inserted using a 3D image driver which may be embodied as software, the 3D image may be provided using a general graphics card which is not a graphics card used exclusively for a 3D image. Accordingly, the computer 100 may provide a 3D image using various graphics cards.

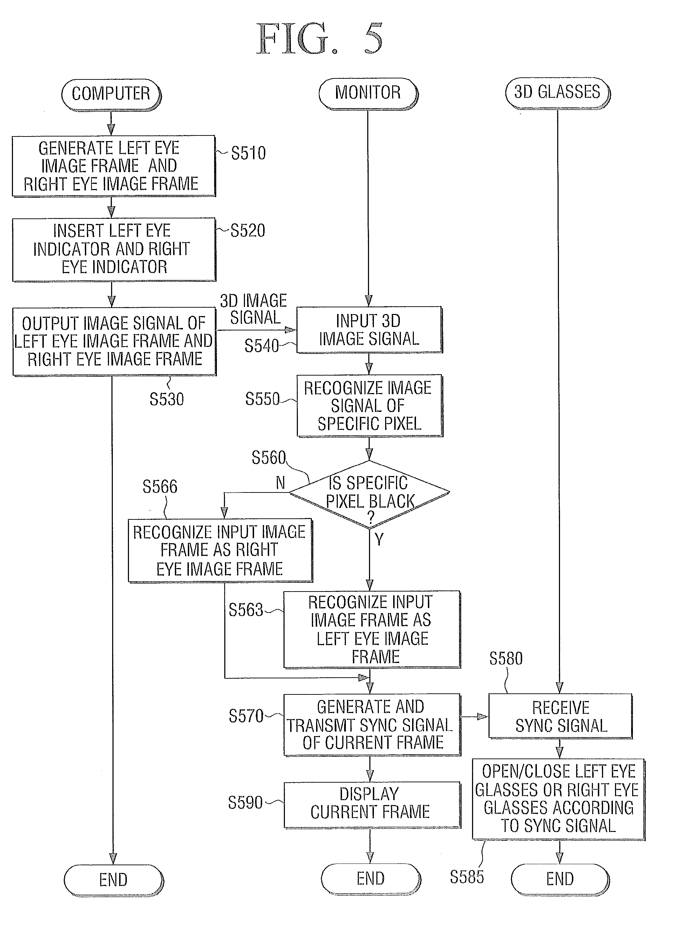

FIG. 5 is a flowchart to explain a method of providing a 3D image according to an exemplary embodiment.

Referring to FIG. 5, a computer 100 generates a left eye image frame and a right eye image frame of a 3D image using a 3D image source (operation S510). In this case, the left eye image frame and the right eye image frame are generated by a 3D image driver 135 which may be software executed by the computer 100. That is, the computer 100 executes the 3D image driver 135 and generates the left eye image frame and the right eye image frame using the 3D image driver 135.

The 3D image driver 135 executed by the computer 100 inserts an indicator when the left eye image frame and the right eye image frame are generated (operation S520). Herein, the indicator indicates whether a current frame is a left eye image frame or a right eye image frame. A detailed description regarding the indicator has been provided above.

Subsequently, the computer 100 transmits an image signal regarding a left eye image frame and a right eye image frame of a 3D image including an indicator to the monitor 200 (operation S530). In this case, the computer 100 is connected to the monitor 200 through a wired or wireless interface. For example, the computer 100 may be connected to the monitor via DVI, HDMI 1.0 to HDMI 1.3, etc.

Subsequently, the monitor 200 receives a 3D image from the computer 100 (operation S540) and recognizes a signal value of a specific pixel from data corresponding to a frame of the input 3D image (operation S550). Herein, the specific pixel includes an indicator which indicates whether a frame is a left eye image frame or a right eye image frame. The specific pixel may be the first pixel of the frame or another frame.

The monitor 200 determines whether a specific pixel is a black pixel or not (operation S560). If the specific pixel is a black pixel (operation S560-Y), the monitor 200 recognizes an input image frame as a left eye image frame (operation S563). If the specific pixel is not a black pixel (operation S560-N), the monitor 200 recognizes an input image frame as a right eye image frame (operation S566).

However, it is understood that another exemplary embodiment is not limited thereto. For example, according to another exemplary embodiment, the monitor 200 may recognize an input image frame as a right eye image frame if the specific pixel is a black pixel, and recognize an input image frame as a left eye image frame if the specific pixel is not a black pixel.

The monitor 200 generates a sync signal of the 3D glasses 300 using an indicator and transmits the sync signal to the 3D glasses 300 (operation S570). Specifically, if the monitor 200 recognizes that a currently input frame is a left eye image frame using an indicator, the monitor 200 generates a sync signal indicating that a current image is a left eye image. If the monitor 200 recognizes that a currently input frame is a right eye image frame using an indicator, the monitor 200 generates a sync signal indicating that a current image is a right eye image.

For example, if the monitor 200 recognizes that a currently input frame is a left eye image frame, the monitor 200 may generate an interrupt signal as a sync signal at a time when the left eye image frame ends, and if the monitor 200 recognizes that a currently input frame is a right eye image frame, the monitor 200 may generate a sync signal without generating an interrupt. This will be explained below with reference to FIG. 6.

The 3D glasses 300 receive a sync signal from the monitor 200 (operation S580) and alternately open and close left eye glasses and right eye glasses according to the received sync signal (operation S585). The monitor 200 displays a current frame (operation S590).

Through the above process, the computer 100 transmits a 3D image to which an indicator is inserted to the monitor 200 and thus, the monitor 200 may be synchronized with the 3D glasses 300. In particular, as the computer 100 generates a left eye image and a right eye image to which an indicator is inserted using a 3D image driver which may be embodied as software, the 3D image may be provided using a general graphics card which is not a graphics card used exclusively for a 3D image. Accordingly, the computer 100 may provide a 3D image using any of various graphics cards.

FIG. 6 is a view illustrating a signal form of a 3D image and 3D glasses according to an exemplary embodiment.

The signal displayed on the upper portion of FIG. 6 is a 3D image signal 600 generated in a computer, and the signal displayed on the lower portion of FIG. 6 is a 3D glasses sync signal 650 generated in a monitor.

As illustrated in FIG. 6, the 3D image signal 600 includes a Vsync signal and an image signal of an active area in one frame. Herein, the active area represents an area including an image signal value of each pixel. It can be seen that the 3D image signal 600 includes a left eye image frame (L Frame) and a right eye image frame (R Frame).

In addition, it can be seen that an indicator is inserted to the first pixel value of each active area. Specifically, a first indicator 615 is inserted to a first active area 610, a second indicator 625 is inserted to a second active area 620, and a third indicator 635 is inserted to a third active area 630. The first indicator 615 and the third indicator 635 are black signals.

Accordingly, as illustrated in FIG. 6, once the 3D image signal 600 is input, the monitor 200 determines whether an indicator is black or not.

If the indicator is black, the monitor 200 recognizes a current frame as a left eye image frame and interrupts a sync signal at a time when the current frame comes to an end. Subsequently, the monitor 200 may synchronize the time when the left eye image frame comes to an end with the end of the sync signal 650 regarding the left eye image.

As such, the monitor 200 may generate the sync signal 650 of 3D glasses which is synchronized with the 3D image signal 600 using an indicator inserted to a left eye image frame and a right eye image frame. However, as described above, it is understood that another exemplary embodiment is not limited thereto. For example, according to another exemplary embodiment, the indicator may not be inserted in each image frame, and the monitor may determine whether a current frame that does not include an indicator is a left eye image frame or a right eye image frame using the indicator of another frame.

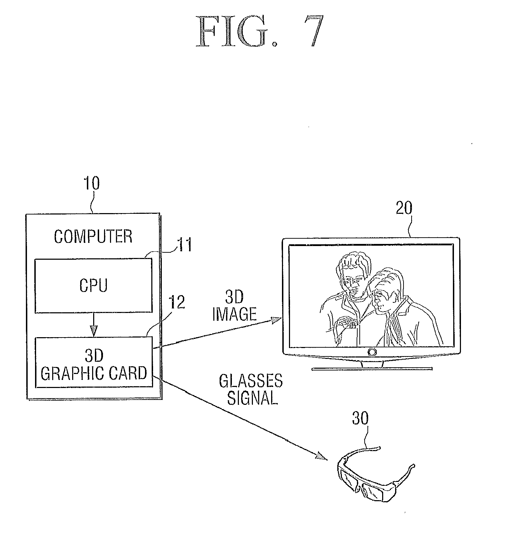

FIG. 7 is a view illustrating a 3D image providing system according to a related art method. As illustrated in FIG. 7, in a 3D image providing system according to the related art method, a 3D graphics card 12 generates a 3D image and a 3D glasses sync signal under the control of a CPU 11 of a computer 10. The 3D graphics card 12 transmits a 3D image signal to a monitor 20 and the 3D glasses sync signal to 3D glasses 30.

As such, according to the 3D image providing system according to the related art method, the monitor 20 and the 3D glasses 30 are driven by the computer 10, and a user should purchase not only the computer 10, but also the 3D graphics card 12 used exclusively for a 3D image.

However, in the 3D image providing system according to an exemplary embodiment, the computer 100 transmits a 3D image to which an indicator is inserted to the monitor 200 and thus, the monitor 200 may be synchronized with the 3D glasses 300. In particular, as the computer 100 generates a left eye image and a right eye image to which an indicator is inserted using a 3D image driver which may be embodied as software, the 3D image may be provided using a general graphics card which is not a graphics card used exclusively for a 3D image. Accordingly, the computer 100 may provide a 3D image using any of various graphics cards.

Meanwhile, one or more exemplary embodiments may be applied to a computer readable recording medium, for example, which can be read by a computer including software of a 3D image driver which provides a 3D image providing method according to an exemplary embodiment. The recording medium readable by a computer may be any data storage apparatus which is capable of reading and storing data by a computer. For example, the recording medium readable by a computer may be ROM, RAM, CD-ROM, magnetic tape, floppy disk, optical disk, or hard disk drive. In addition, a code or a program which is stored in a recording medium and can be read by a computer may be transmitted through a network connecting computer. Moreover, while not required in all aspects, one or more of the above-described components of the computer 100, the monitor 200, and the 3D glasses 300 can include a processor or microprocessor executing a computer program stored in a computer-readable medium.

Although a few exemplary embodiments have been shown and described, it would be appreciated by those skilled in the art that changes may be made in these exemplary embodiments without departing from the principles of the inventive concept, the scope of which is defined in the claims.

## Claims

1. A method of providing a three-dimensional (3D) image in a computer outputting a 3D image to a monitor, the method comprising:
processing a left eye image frame and a right eye image frame corresponding to a frame of an input 3D image;
inserting an indicator indicating whether a current frame, among the left eye image frame and the right eye image frame, is a left eye image or a right eye image to a specific pixel of the current frame; and
outputting, to the monitor, an image signal comprising the left eye image frame and the right eye image frame, to at least one of which the indicator is inserted.

2. The method as claimed in claim 1, wherein the processing and the inserting are performed by a 3D image driver embodied as software.

3. The method as claimed in claim 1 or 2, wherein the specific pixel is a first pixel of the current frame.

4. The method as claimed in any one of claims 1 to 3, wherein the indicator represents the specific pixel as a black pixel when the current frame is one of the left eye image and the right eye image, and represents the specific pixel as a non-black pixel when the current frame is the other of the left eye image and the right eye image.

5. A computer outputting a 3D image to a monitor, the computer comprising:
a storage unit which stores a 3D image driver;
a processing unit which executes the 3D image driver; and
a graphics card which outputs, to the monitor, a 3D image generated by the 3D image driver,
wherein the 3D image driver generates a left eye image frame and a right eye image frame corresponding to a frame of an input 3D image and inserts an indicator indicating whether a current frame, among the left eye image frame and the right eye image frame, is a left eye image or a right eye image to a specific pixel of the current frame.

6. The computer as claimed in claim 5, wherein the specific pixel is a first pixel of the current frame.

7. The computer as claimed in claim 5 or 6, wherein the indicator represents the specific pixel as a black pixel when the current frame is one of the left eye image and the right eye image, and represents the specific pixel as a non-black pixel when the current frame is the other of the left eye image and the right eye image.

8. A method of providing a 3D image in a monitor which displays the 3D image received from a computer, the method comprising:
recognizing whether a current frame of the 3D image is a left eye image frame or a right eye image frame using an indicator included in a specific pixel of the current frame;
generating a sync signal for 3D glasses using the indicator;
transmitting the sync signal to the 3D glasses; and
alternately displaying the left eye image frame and the right eye image frame.

9. The method as claimed in claim 8, wherein the specific pixel is a first pixel of the current frame.

10. The method as claimed in claim 8 or 9, wherein the recognizing comprises:
if the specific pixel is a black pixel, recognizing the current frame as one of the left eye image frame and the right eye image frame; and
if the specific pixel is a non-black pixel, recognizing the current frame as the other of the left eye image frame and the right eye image frame.

11. A monitor displaying a 3D image received from a computer, the monitor comprising:
an image input unit which receives the 3D image;
a control unit which recognizes whether a current frame of the 3D image is a left eye image frame or a right eye image frame using an indicator included in a specific pixel of the current frame, and generates a sync signal for 3D glasses using the indicator;
a glasses signal transmitting unit which transmits the sync signal to the 3D glasses; and
a display unit which alternately displays the left eye image frame and the right eye image frame.

12. The monitor as claimed in claim 11, wherein the specific pixel is a first pixel of the current frame.

13. The monitor as claimed in claim 11 or 12, wherein:
if the specific pixel is a black pixel, the control unit recognizes the current frame as one of the left eye image frame and the right eye image frame; and
if the specific pixel is a non-black pixel, the control unit recognizes the current frame as the other of the left eye image frame and the right eye image frame.

14. A recording medium having recorded thereon a program executable by a computer for performing the 3D image providing method as claimed in any one of claims 1 to 4.
